# EUROPEAN PATENT SPECIFICATION

(11) **EP 1 712 474 B1**
(45) Date of publication and mention of the grant of the patent: **03.09.2008**
(21) Application number: 06112380.8
(22) Date of filing: 07.04.2006
(51) Int. Cl.: B65B 61/08, B65B 51/30

(54) **Packaging machine**
Verpackungsmaschine
Machine d'emballage

(30) Priority: 11.04.2005 JP 2005113290
(43) Date of publication of application: 18.10.2006
(73) Proprietor: ISHIDA CO., Ltd., Kyoto-shi, Kyoto 606 (JP)
(72) Inventor: Hashimoto, Satoshi, Ritto-shi Shiga 520-3026 (JP); Kondo, Masashi, Ritto-shi Shiga 520-3026 (JP); Ichikawa, Makoto, Ritto-shi Shiga 520-3026 (JP)
(74) Representative: Skone James, Robert Edmund

(56) References cited:
- GB-A- 2 038 758
- US-A- 3 340 129
- US-A- 3 524 301
- US-A- 3 943 686

## Description

### BACKGROUND OF THE INVENTION

### Field of the Invention

The present invention relates to a packaging machine, and more particularly to packaging machines that have a cutting device installed on a sealing device.

### Background Information

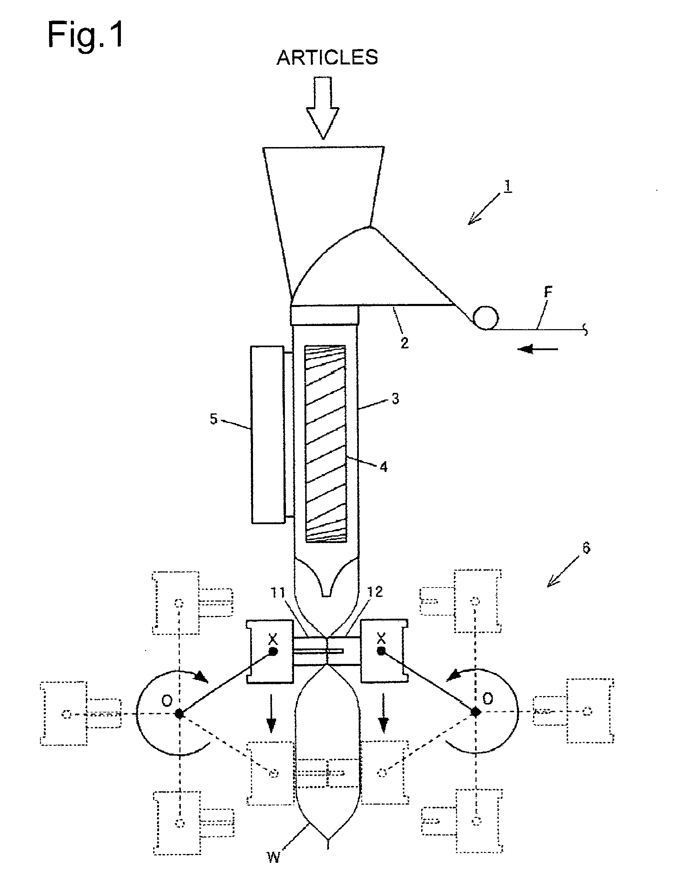

In conventional practice, packaging machines generally form bags, into which articles are placed, by sealing a heat-melting film rolled into a cylinder lengthwise and widthwise, where the heat-melting film is made of a material such as a synthetic resin. Such packaging machines are commonly equipped with a cutting device for cutting the widthwise sealed areas along the width to separate the individual bags. Known examples of such cutting devices include melting-type cutting devices as disclosed in Japanese Examined Utility Model Application No. 6-34264 (FIG. 1), wherein the film is held between a pressing member, described as a "cutter blade" in this reference, and a receiving member, described as a "cutter receiving blade" in this reference, and heat and pressure are applied to press in and cut through the film. The cut ends of the bags are thereby bonded by heat. This is advantageous in that the ends of the bags do not lift up, the appearance of the bag is not compromised, and the sealing of the bag is improved.

However, with melting-type cutting devices such as those described above, since the film is melted with heat and cut through with pressure, the pressing member must be pressed into the receiving member with a relatively large amount of force. Therefore, in conventional melting-type cutting devices, the pressing member is either fastened to a widthwise sealing device, as disclosed in Japanese Examined Utility Model Application No. 6-34264, or supported by a spring with a large spring constant. However, the result of this is that a conventional melting-type cutting device has drawbacks in that it is constantly cutting bags and cannot switch back and forth from a cutting to a non-cutting mode. Thus, it is impossible to manufacture bags that are connected to each other uncut, so as to indicate, for example, the presence of one or more abnormal bags. In one suggested solution to this problem, as disclosed in Japanese Examined Utility Model Application No. 61-43687 (FIG. 2), Japanese Patent No. 2849071 (specification and FIG. 7), and Japanese Examined Utility Model Application No. 7-51454 (FIGS, 5 and 6) listed below, the pressing member is made movable, so that the pressing member is pushed into the receiving member when bags are being melted, and the pressing member is not pushed into the receiving member when bags are not being melted.

However, with the cutter device disclosed in Japanese Examined Utility Model Application No. 61-43687, when either a cutting blade or a perforating blade is used, there is no support for bearing the large amount of force applied from the front of the blade, and therefore the blade retracts, and the film cannot be cut through with the large amount of force applied. In addition, in the packaging machine disclosed in Japanese Patent No. 2849071, when perforating needles configured to be capable of oscillating by means of a parallel link move forward past the sealing surface of a seal bar, there is no support for bearing the large amount of force applied from the front of the needles, and therefore the needles retract, and the film cannot be cut through with the large amount of force applied. With the cutting device disclosed in Japanese Examined Utility Model Application No. 7-51454, when perforations are created or when the bags are cut apart from each other, the knife is constantly piercing through the bags, and therefore keeping the pressing member from being pushed into the receiving member is not an option.

US-A-3943686 describes a packaging machine in which successive packets are cut according to the preamble of claim 1. Similar cutting arrangements are described in GB-A-2038758 and US-A-3524301.

Although it is possible for a cylinder or another such drive source for driving the pressing member to bear this large amount of pressure during melting, this will require a large and heavy drive source, and will result an increase in the cost of the cutting device and compromise the speed of the packaging machine.

In view of the above, it will be apparent to those skilled in the art from this disclosure that there exists a need for an improved packaging machine that can switch between cutting and not cutting the bags, and bear the large amount of pressure necessary for cutting, without increasing the size or weight of the drive source of the pressing member. This invention addresses this need in the art as well as other needs, which will become apparent to those skilled in the art from this disclosure.

### SUMMARY OF THE INVENTION

In order to resolve these problems, a packaging machine according to a first aspect of the present invention includes a pair of sealing members configured so as to selectively seal a cylindrical packing material that extends therebetween, a cutting device for cutting the cylindrical packing material, and a stopping unit for selectively stopping the cutting device from retracting, and is characterized in that the cutting device comprises a pressing member arranged on one of the pair of sealing members and a receiving member arranged on the other of the pair of sealing members, the cutting device configured to selectively press the pressing member against the receiving member and cut the cylindrical packing material; in that a switching unit is provided configured to switch the pressing member between a pressing state and a non-pressing state with respect to the receiving member when the sealing members are pressed together; and in that the stopping unit is configured to selectively stop the pressing member from retracting from the pressing state with the receiving member.
The packing material may be cut by applying pressure alone, or it may be cut by applying heat and pressure.

A packaging machine according to a second aspect of the present invention is the packaging machine of the first aspect, wherein the switching unit includes a drive source configured to cause the pressing member to protrude a predetermined distance from the sealing surface of the sealing member, and a force augmenting mechanism configured to transmit the motive energy of the drive source to the pressing member. The stopping unit employs the force augmenting mechanism to stop the pressing member from retracting.

A packaging machine according to a third aspect of the present invention is the packaging machine of the second aspect, wherein the force augmenting mechanism is comprised of a toggling mechanism, and the pressing member is stopped from retracting by reducing the angle formed by the longitudinal direction of the links of the toggling mechanism and the movement direction of the pressing member.

A packaging machine according to a fourth aspect of the present invention is the packaging machine of the second aspect, wherein the force augmenting mechanism is comprised of a cam mechanism, and the pressing member is stopped from retracting by reducing the angle formed by the tangential direction of the cams of the cam mechanism and the direction orthogonal to the movement direction of the pressing member.

A packaging machine according to a fifth aspect of the present invention is the packaging machine of the first aspect, wherein the switching unit comprises an urging unit that urges the pressing member forward, a mobile member that moves freely between an inhibiting position that inhibits the pressing member from retracting and a permitting position that permits the pressing member to retract, and a drive source configured to drive the mobile member to the inhibiting position and the permitting position. The mobile member is employed as the stopping unit.

A packaging machine according to a sixth aspect of the present invention is the packaging machine of any of the first through the fifth aspects, wherein the packaging machine is provided with an adjusting unit configured to adjust the pressing force of the pressing member when the pressing member is pressed together with the receiving member.

A packaging machine according to a seventh aspect of the present invention is the packaging machine of any of the first through the sixth aspects, wherein the switching unit is configured to switch the pressing member from the pressing state to the non-pressing state when the sealing members are pressed together.

According to the first aspect, in a packaging machine comprising a cutting device, it is possible to switch between cutting and not cutting the bags because the pressing member is switched between a pressing state with the receiving member and a non-pressing state. In addition, when the bags are being cut, the pressing member will not retract and a large amount of pressure necessary for cutting can be secured, because the stopping unit is provided in order to stop the pressing member from retracting when the pressing member is in the pressing state. Moreover, it is possible to avoid an increase in the size and weight of the drive source of the pressing member because the stopping unit is provided separately from the drive source of the pressing member.

Next, according to the second aspect, the large amount of pressure necessary for cutting can be secured with a small amount of force, because the force augmenting mechanism for transmitting the motive energy of the drive source to the pressing member is used as the stopping unit. In addition, an increase in the number of components can be suppressed because the force augmenting mechanism is also employed as the stopping unit.

Next, according to the third aspect, when a toggling mechanism is employed as the force augmenting mechanism, the large amount of pressure necessary for cutting is reliably secured with a small amount of force because the longitudinal direction of the links of the toggling mechanism and the movement direction of the pressing member are made to substantially coincide.

Next, according to the fourth aspect, when a cam mechanism is employed as the force augmenting mechanism, the large amount of pressure necessary for cutting is reliably secured with a small amount of force, because the tangential direction of the cams of the cam mechanism and the movement direction of the pressing member are made to be substantially orthogonal.

Next, according to the fifth aspect, since the mobile member that moves freely between an inhibiting position that inhibits the pressing member from retracting and a permitting position that permits the pressing member to retract is used as the stopping unit, the large amount of pressure necessary for cutting can be reliably secured by this mobile member.

Next, according to the sixth aspect, since the pressing force of the pressing member is adjusted, the cutting pressure can be altered in various degrees according to, for example, the type and the thickness of the packing material, the cutting time, and any other factors, thus making it possible to cut the bags quickly and precisely.

According to the seventh aspect, since the pressing member is switched from the pressing state to the non-pressure position during the sealing operation of the sealing members in mutual contact, the time period during which the pressing force of the sealing members decrease due to the pressing member being in the pressing state is shortened, the large amount of pressing force between the sealing members necessary for sealing the cylindrical packing material is maintained for a long period of time, and the cylindrical packing material is sealed reliably and firmly.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

FIG. 1 is a schematic side view showing the primary configuration of a packaging machine according to an embodiment of the present invention;

FIG. 2 is an enlarged plan view of the periphery of a widthwise sealing device in the packaging machine;

FIG. 3 is a cross-sectional side view taken along line I-I in FIG. 2;

FIG. 4 is a partial enlarged view of FIG. 3 when the pressing member is in contact under pressure with the receiving member;

FIG. 5 is a time chart showing the operation timing of the sealing jaws and the pressing member in the packaging machine;

FIG. 6 is a side view showing the configuration of one of the sealing jaw units of a widthwise sealing device in the packaging machine according to the second embodiment of the present invention;

FIG. 7 is a view from line II-II in FIG. 6, showing the bearings of the sealing jaw units, the cam mechanical housings, the heat insulating blocks 53, and the sealing jaws, all in two-dot chain lines; and

FIG. 8 is a cross-sectional plan view showing the configuration of one of the sealing jaw units of the widthwise sealing device in the packaging machine according to the third embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

### FIRST EMBODIMENT

In this embodiment, the present invention is applied to a packaging machine 1 shown in FIG. 1. Specifically, this packaging machine 1 is a conventional lengthwise pillow-type bag making machine, comprising a former 2, a tube 3, pull-down belts 4, 4 (only one is shown), a lengthwise sealing device 5, and a widthwise sealing device 6. A heat-melting film F made of a synthetic resin or the like is conveyed as shown by the arrow, and rolled into a cylinder by the former 2. The cylindrical film F is suspended down along the periphery of the tube 3, and as the film is conveyed further downward by the pull-down belts 4, 4, the overlapping lateral edges of the film are sealed along the length thereof by being heated and welded by the lengthwise sealing device 5, and the film is further sealed along the width thereof by being heated and welded by the widthwise sealing device 6. While the bag W is thereby being manufactured, articles are filled into the bag W from above via the tube 3.

The widthwise sealing device 6 has a pair of sealing jaws 11 and 12 that come in mutual contact with the cylindrical film F, and the film is sandwiched therebetween. These scaling jaws 11 and 12 do not block the continuous conveyance of the film F, because they move in symmetrical D-shaped trajectories (D motion) when viewed from the side. In addition, the sealing jaws 11 and 12 turn around the rotational axes X, X while pivoting around the pivotal axes O, O so that the same orientation is always maintained, that is, an orientation in which the sealing surfaces of the sealing jaws 11 and 12 face each other.

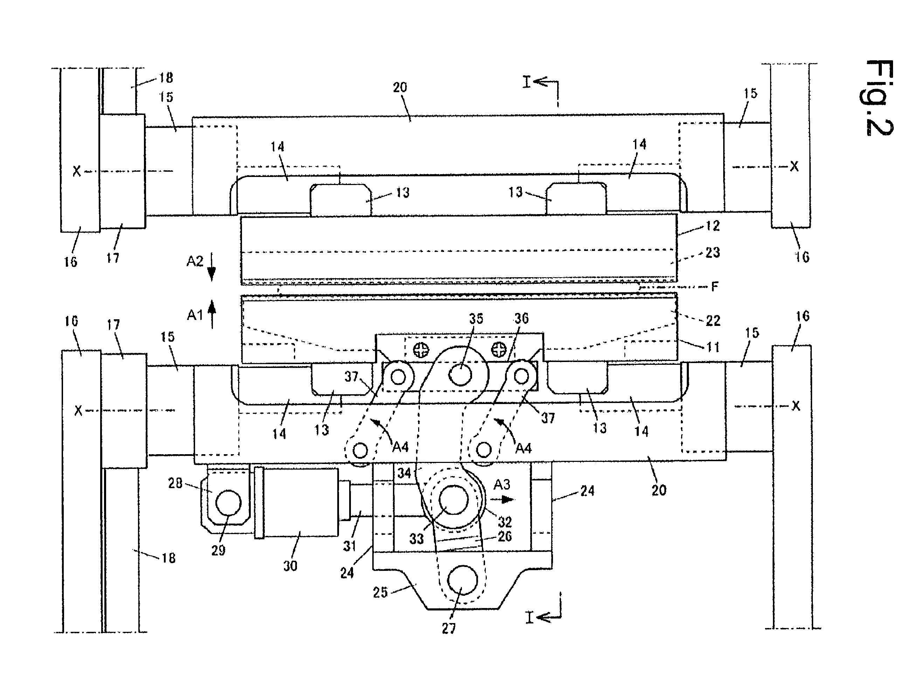

As shown in FIG. 2, the sealing jaws 11 and 12 are connected to bearing boxes 15, 15 by means of left and right pairs of thermal insulating blocks 13, 13 and mounting blocks 14, 14. The bearing boxes 15, 15 rotatably support shafts, not shown in the figure, that serve as the rotational axes X, and these shafts extend between the pivoting ends of left and right pairs of pivoting arms 16, 16. Units 17 for rotating the sealing jaws 11 and 12 around the rotational axes X are provided adjacent to one pair of pivoting arms 16. Timing belts 18 for constantly maintaining the sealing jaws 11 and 12 in the same orientation are wound between the units 17 and the pivotal axes O.

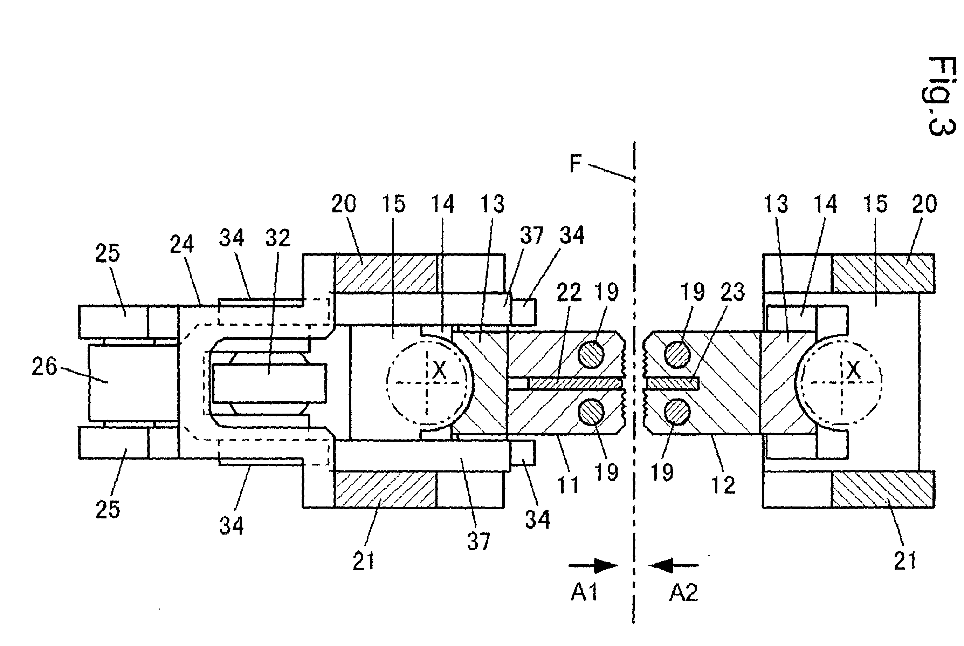

As shown in FIG. 3, the bearing boxes 15, 15 are fixed in place between the top and bottom jaw frames 20 and 21. The rear surfaces of the thermal insulating blocks 13 and the mounting blocks 14 are formed into arcuate concavities (similar to base members 36 described below), as shown in FIG. 3. This is to avoid interference with the shafts, shown by the two-dot chain line, that serve as the rotational axes X.

As shown in FIG. 3, a gap that expands horizontally is formed in the vertical middle of one sealing jaw 11, hereinafter referred to as the first jaw, and a pressing member 22 is provided inside this gap. A horizontal concave groove is formed in the vertical middle of the other sealing jaw 12, hereinafter referred to as the second jaw, and a receiving member 23 is embedded in this concave groove. The pressing member 22 moves freely in the horizontal direction, particularly in the horizontal direction that extends towards and away from both the second jaw 12 and the receiving member 23, whereas the receiving member 23 is fixed in place in the second jaw 12.

The top and bottom pairs of heaters 19, 19 are embedded in the first jaw 11 and the second jaw 12 in order to sandwich the pressing member 22 and the receiving member 23. These heaters 19 are used to heat the jaws 11 and 12, the pressing member 22, and the receiving member 23 by heat conduction. Alternatively, heaters for the jaws 11 and 12 and heaters for the pressing member 22 and receiving member 23 can be provided separately.

In this embodiment, the distal end of the pressing member 22 is formed to be flat, because the first jaw 11 and the second jaw 12 are both flat jaws with flat sealing surfaces. The shape of the pressing member 22 is not limited thereto, and forming the distal end to protrude in an arcuate shape, or forming the distal end into a sharp knife shape or any other shapes, will be acceptable as alternatives.

The configuration of the pressing member 22 is summarized below. The pressing member 22 is allowed to move freely in the horizontal direction. As shown in FIG. 2, a pair of left and right leg members 24, 24 is attached to the back of the jaw frames 20 and 21, and attached to a pair of top and bottom supporting frames 25, 25. A first support shaft 27 extends vertically between the supporting frames 25, 25, with the rear portion of the first link 26 rotatably supported on the first support shaft 27. Similarly, a supporting bracket 28 is attached on the rear side of the jaw frames 20 and 21 on the same side as the leg members 24. The tail end of an air cylinder 30 is rotatably supported on a support shaft 29 in a supporting bracket 28. The distal end (rod end) 32 of a rod 31 of this air cylinder 30 and the front portion of the first link 26 are connected via a second support shaft 33. The front portion of the first link 26 is composed of a top and a bottom level, and the rod end 32 is connected so as to be sandwiched in between the top and the bottom levels of the front portion of the first link 26, as shown in FIG. 3.

The parts of the second links 34, 34 on the back side are also connected to the second support shaft 33, as shown in FIG. 2. A pair of top and bottom second links 34 is provided, as shown in FIG. 3. This is to avoid interference with the shaft, shown by a two-dot chain line, that serves as the rotational axis X. The parts of the second links 34, 34 on the front side are connected to a base member 36 via a third support shaft 35, as shown in FIG. 2. The rear portion af the pressing member 22 is screwed in place on the base member 36 and supported so that, through the four top and bottom oscillating links 37 on both the left and the right side, it is able to oscillate back and forth at an incline in the horizontal direction. The pressing member 22 is thereby able to move horizontally, toward the second jaw 12 or the receiving member 23, and protrude a specific distance out from the sealing surface of the first jaw 11, and also away from the second jaw 12 or the receiving member 23 in order to retract into the first jaw 11, away from the sealing surface thereof.

The operation of the packaging machine 1, according to the first embodiment configured as described above, will be described below. As shown in FIG. 1, in this packaging machine 1, the cylindrical film F is continuously conveyed, and the first jaw 11 and second jaw 12 continuously pivot synchronously and symmetrically around the pivotal axes O, O. The cylindrical film F is sandwiched and sealed at the top first by the jaws 11 and 12. The, while the cylindrical film F is continuously conveyed downward, and before the bottom edge of the cylindrical film F passes by the jaws 11 and 12, the jaws 11 and 12 will come together to press and seal cylindrical film F therebetween along the width thereof to form a bag W. In addition, during this sealing operation, the distance between the pivotal axes O, O is controlled, and the cylindrical film F is conveyed straight downward.

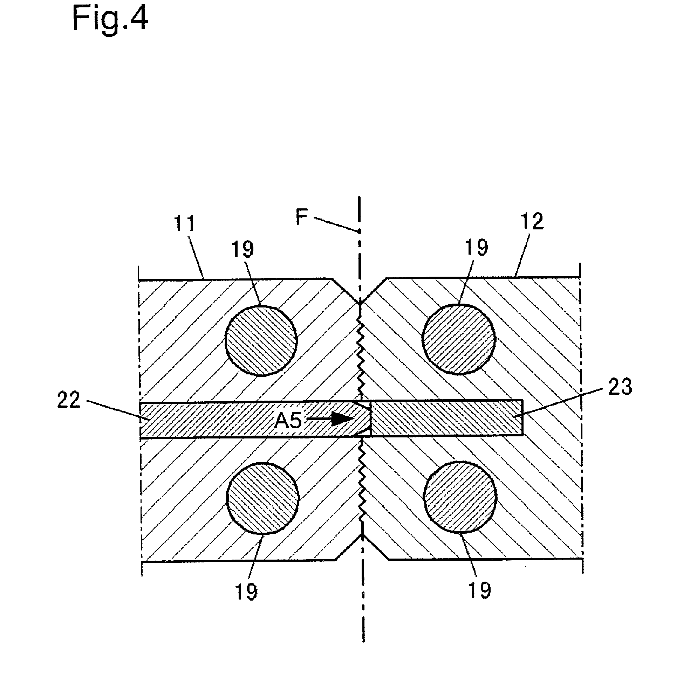

When the first jaw 11 and the second jaw 12 come together to press and seal the cylindrical film F together, the jaws 11 and 12 draw near each other as shown by the arrows a and b in FIG. 2, and the sealing surfaces are pressed together as shown in FIG. 4. During the sealing operation, the air cylinder 30 turns on, the rod 31 advances forward, and the rod end 32 moves into a position directly in front of the first support shaft 27, as shown by the arrow c in FIG. 2. Accordingly, the rod end 32, the second support shaft 33, the front portion of the first link 26, and the parts of the second links 34 in the rear side move forward, and the parts of the second links 34 on the front side and the third support shaft 35 cause the base member 36 and the pressing member 22 to move forward. As a result, the base member 36 and the pressing member 22 oscillate forward at an incline in the horizontal direction via the oscillating links 37, in the direction shown by the arrows d, d in FIG. 2, and the pressing member 22 protrudes a specific distance from the sealing surface of the first jaw 11 so as to draw near the second jaw 12 or the receiving member 23. The pressing member 22 is then pressed together with the receiving member 23, as shown by the arrow e in FIG. 4, and the cylindrical film F sealed by the first jaw 11 and second jaw 12 is cut through and melted along the width by means of the heat and pressure in the horizontal sealing area.

On the other hand, when the air cylinder 30 is turned off, the rod 31 will retract and the rod end 32 will move in the opposite direction of the arrow c, which causes the base member 36 and pressing member 22 to oscillate in the direction opposite the arrow d, d. As a result, the pressing member 22 retracts inward from the sealing surface of the first jaw 11, separates from the second jaw 12 and the receiving member 23, and is no longer pressed together with the receiving member 23.

The toggling mechanism, which is the force augmenting mechanism, is composed of the cylinder rod 31, the first link 26, and the second links 34. When the pressing member 22 is pressed together with the receiving member 23, the three support shafts 27, 33, and 35 are aligned substantially in the pressure contact direction e. As a result, the longitudinal direction of the first link 26, the longitudinal direction of the second links 34, and the moving direction of the pressing member 22, are approximately in the same direction as the pressing direction e.

In the first embodiment, the packaging machine 1 has a melting-type cutting device, where the pressing member 22 can either be pressed together with the receiving member 23, or not in contact with the receiving member 23, by switching the air cylinder 30 on or off. Therefore, it is possible to cut or not cut the bags W. Moreover, when the pressing member 22 is pressed together with the receiving member 23, that is, when the bags W are being cut, the longitudinal direction of the first link 26 of the toggling mechanism and the longitudinal direction of the second links 34 substantially coincide with the moving direction e of the pressing member 22, and therefore these links 26 and 34 act as a stopping unit for preventing the pressing member 22 from retracting inward. As a result, when the bags W are being melted, the pressing member 22 does not retract, and the large amount of pressure necessary for melting is reliably transmitted. In this case, because the stopping unit is separate from the air cylinder 30, a considerable increase in the size and weight of the air cylinder 30, as the drive source af the pressing member 22, can be avoided. It is also possible to secure the large amount of pressure necessary for melting with a small amount of force, because the stopping unit is provided by the force augmenting mechanism, or the toggling mechanism in the first embodiment, that transmits the motive energy of the air cylinder 30 to the pressing member 22. Furthermore, an increase in the number of components in the packaging machine 1 will be inhibited because the force augmenting mechanism is also utilized also as the stopping unit.

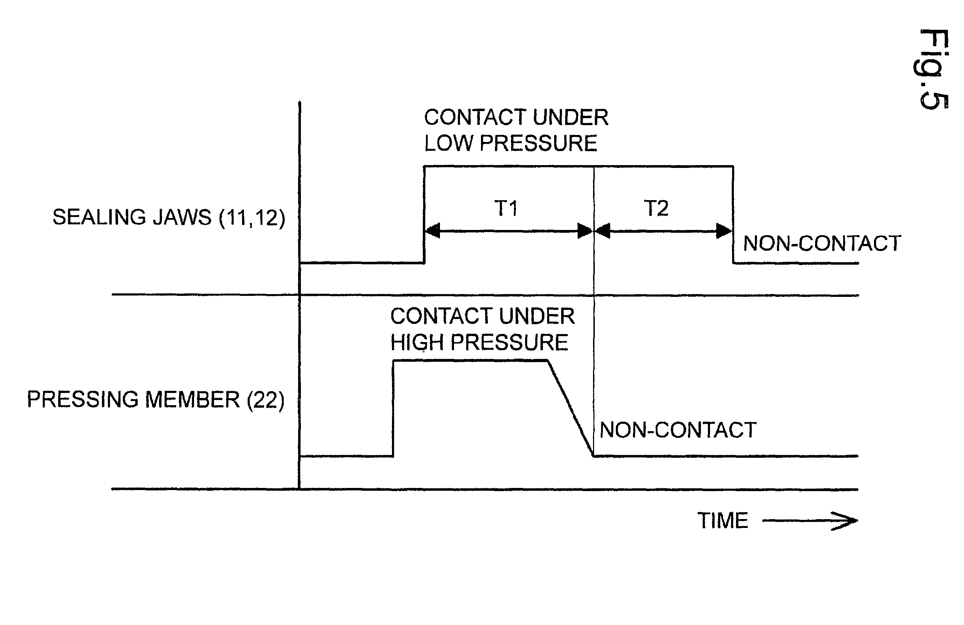

In this case, the operation timing of the sealing jaws 11 and 12 and the pressing member 22 is preferably set so that during a sealing operation under low pressure between the sealing jaws 11 and 12, the pressing member 22 is switched from pressed under high pressure with the receiving member 23 to not being in contact, as shown in FIG. 5. When the pressing member 22 is pressed together with the receiving member 23, it is unavoidable that the sealing jaws 11 and 12 will tend to rise upward and lose some of the contact force, which compromises the sealing of the cylindrical film F, as shown by the time period T1 in the figure. In view of this, the cylindrical film F can be sealed reliably and firmly by reducing the time period T1 during which the pressure is reduced. This is achieved by switching the pressing member 22 to not being pressed together with the receiving member 23 before the sealing jaws 11 and 12 are no longer pressed together, which will ensure that there is a large pressing force between the sealing jaws 11 and 12 necessary for sealing the cylindrical film F for a long period of time, shown by the time period T2 in the figure.

The bags W can be cut without certain undesirable defects because of the sliding motion of the pressing member 22, i.e., the pressing member 22 oscillates in the direction opposite the arrows d, d and slides backward at an incline when the pressing member 22 is switched to the non-pressing position.

### SECOND EMBODIMENT

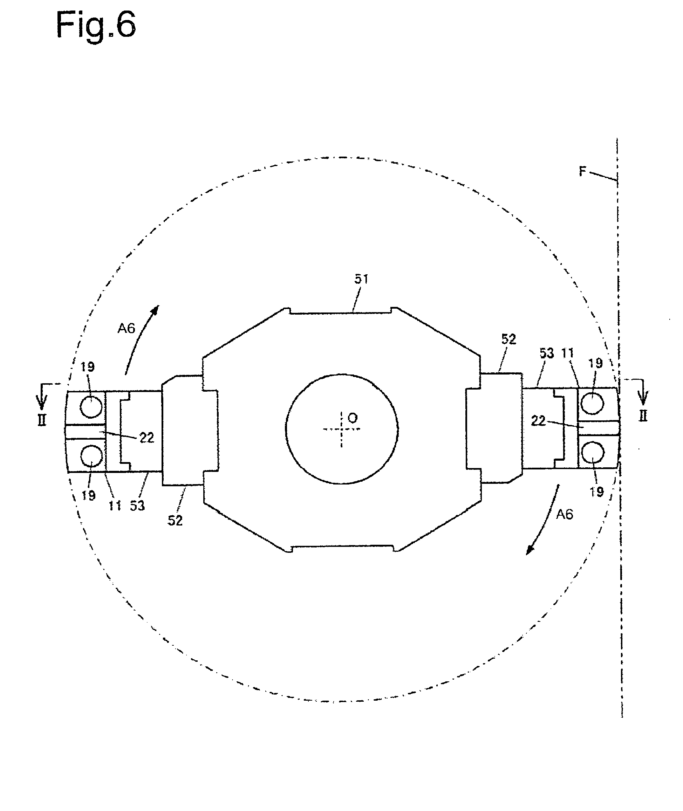

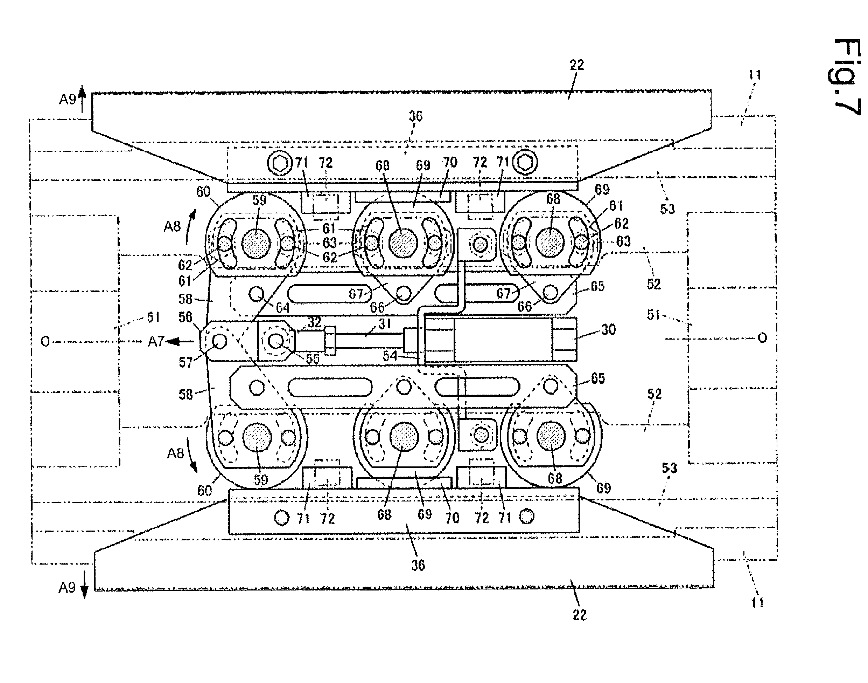

A second embodiment of the present invention will be described with reference to FIGS. 6 and 7. The same reference numbers are used for structural elements identical to or resembling those of the first embodiment, and only the characteristics unique to this embodiment are described below. In the first embodiment, a toggling mechanism was used as the force augmenting mechanism for transmitting the motive energy of the air cylinder 30 to the pressing member 22; however, in the second embodiment, a cam mechanism is used as the force augmenting mechanism.

In the second embodiment, a widthwise sealing device 6 has sealing jaw units. Two af these jaw units come in contact and sandwich the film F, where the pressing members 22 are provided on the first jaws 11 and the receiving members 23 are provided on the second jaws 12. However, only a jaw unit of the first jaws 11 is described below as an example, shown in FIG. 6.

Specifically, this jaw unit includes two bearings 51, 51, only one shown in the figure, for axially supporting a shaft, not shown in the figure, that serves as a pivotal axis O, two cam mechanism housings 52, 52 extending between the bearings 51, 51 in point symmetry to the pivotal axis O, heat insulating blocks 53, 53 mounted on the housings 52, 52, and sealing jaws 11, 11 mounted on the heat insulating blocks 53, 53.

As the arcuate motion, the jaw unit of the first jaws 11 and the jaw unit of the second jaws 12 rotate synchronously and symmetrically in the direction of the arrows f, f while sandwiching the cylindrical film F, whereby the two first jaws 11,11 and the two second jaws 12, 12 pivot around the pivotal axes O, O, and the jaws 11 and 12 meet and come into mutual contact once every half rotation of the jaw units, in order to form a widthwise seal. Therefore, in the second embodiment, the widthwise sealing device 6 does not hinder the film F from being continuously conveyed. In addition, the sealing surfaces of the sealing jaws 11 and 12 are formed into arcuate protrusions, similar to the front edge of the pressing members 22.

As shown in FIG. 7, the air cylinder 30 is housed inside the jaw unit, and a drive link 56 is rotatably connected to the distal end (rod end) 32 of the rod 31 via a pin 55. Two cam mechanisms corresponding to the two first jaws 11, 11 are disposed in point symmetry in relation to the pivotal axis O on both sides of the air cylinder 30. The air cylinder 30 is attached to the cam mechanism housings 52, 52 via a bracket 54.

Driven links 58 are rotatably connected to driving links 56 via pins 57. Note that there are two driven links 58 in point symmetry. The driven links 58 can oscillate around oscillating shafts 59. The oscillating shafts 59 are fixed to the cam mechanism housings 52.

First cams 60 are laid over the driven links 58. In this case, arcuate long holes 61,61 are formed in the first cams 60, and the first cams 60 are coupled with the driven links 58 in a manner allowing for phase adjustment by bolts 62, 62 and press plates 63 via the long holes 61, 61.

Pins 64 are placed on the driven links 58, and coupling links 65 interlock with these pins 64. Also, second and third driven links 67, 67 are provided adjacent to the driven links 58 at substantially equal intervals and are allowed to oscillate around oscillating shafts 68, 68. These second and third oscillating shafts 68, 68 are also fixed to the cam mechanism housings 52.

Second and third cams 69, 69 are also laid over and coupled with the second and third driven links 67, 67 in a manner that allows for phase adjustment, and the coupling links 65 interlock with the pins 66, 66 provided on the second and third driven links 67, 67.

Guide rails 70 and overhanging blocks 71, 71 are provided to the back surfaces of the base members 36 for supporting the pressing members 22. The second cams 69 engage with the guide rails 70, and the ends of the two coil springs 72, 72 at one end are fixed to the cam mechanism housing 52, while the ends at the other end are coupled with each of the two overhanging blocks 71, 71. The base members 36 are thereby urged towards the cams 60, 69, 69, and the base members 36 are constantly in contact with the cams 60, 69, 69.

In the configuration described above, when the air cylinder 30 is turned on, the rod 31 advances forward, and the rod end 32 and driving link 56 move in the direction of the arrow g in FIG. 7. Accordingly, the driven links 58 and the first cams 60 rotate in the direction of the arrow h, and the second and third driven links 67, 67 and the second and third cams 69, 69 rotate together in the direction of the arrow h via the coupling links 65. The degree of lift by the cams 60, 69, 69 increases. The base members 36 and the pressing members 22 are pushed outward in a horizontal plane in the direction of the arrows i, and the pressing members 22 protrude a specific distance from the sealing surfaces of the first jaws 11 so as to draw near to the second jaws 12 and the receiving members 23. The pressing members 22 are then pressed together with the receiving members 23, and the cylindrical film F sealed by the first jaws 11 and the second jaws 12 is cut through and melted along its horizontally sealed areas by the heat and pressure.

On the other hand, when the air cylinder 30 is turned off, the rod 31 retract back inward, the rod end 32 and the driving link 56 move in the direction opposite the arrow g, and the links 58, 67, 67 and the cams 60, 69, 69 rotate in the direction opposite the arrow h. As a result, the pressing members 22 retract in the direction opposite the arrows i from the scaling surfaces of the first jaws 11 that are separating from the second jaws 12 and receiving members 23, to be in the non-pressing position with the receiving members 23.

In the second embodiment, the cam mechanism is used as the force augmenting mechanism. When the pressing members 22 are pressed together with the receiving members 23, or in the position when the bags W are being cut, the tangential directions of the cams 60, 69, 69 of the cam mechanism and the movement directions i of the pressing members 22 are made to be substantially orthogonal, and the large amount of pressure necessary for melting is thereby reliably secured with a small amount of force.

In addition, since the cams 60, 69, 69 are provided respectively to the links 58, 67, 67 in a manner that allows phase adjustment, the amount of pressure applied by the pressing members 22 can be adjusted, the melting pressure can be altered to various levels according to the type and the thickness of the film F, the melting time, or any other factors, for example, and the bags W can be cut quickly and precisely.

A step motor or a servomotor, for example, may be used instead of the air cylinder 30. In addition, the sealing jaw unit shown in FIG. 6 is a double-type configuration provided with two first jaws 11 or second jaws 12, one at every 180°. However, the configuration is not limited thereto, and could be another configuration as well. For example, it may be a triple-type configuration provided with three first jaws 11 or second jaws 12, one at every 120°.

### THIRD EMBODIMENT

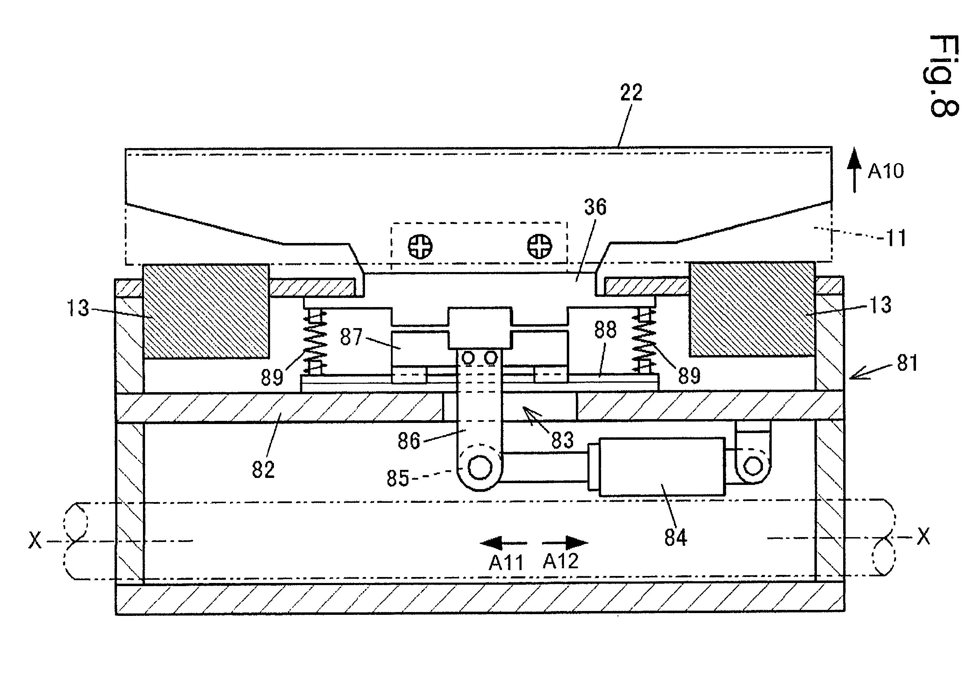

A third embodiment of the present invention will be described with reference to FIG. 8. The same reference numbers will be used to denote structural elements identical or similar to those in the first and second embodiments, and only the characteristics unique to the third embodiment will be described. In the first and second embodiments, the toggling mechanism or the cam mechanism were used as the force augmenting mechanism, as the stopping unit for stopping the pressing members 22 from behind when the pressing members 22 were in contact under pressure, i.e., when the bags W were being cut; however, in the third embodiment, a mobile member is used.

As shown in FIG. 8, the sealing jaw unit has a unit case 81 through which runs a shaft, shown by the two-dot chain line, that serves as a rotational axis X. An air cylinder 84 is housed in this case 81, and a bracket 86 is connected to the rod end 85 thereof, The bracket 86 extends past the opening 83 formed in a dividing plate 82, and is coupled with a mobile member 87. The mobile member 87 moves freely along a rail 88. In addition, in this embodiment, the mobile member 87 is an on/off type translation cam.

The pressing member 22 and the base member 36 are constantly being urged forward in the direction of the arrow k by a number of springs 89. However, the force of the springs that urges them forward is restricted by the two ends of the base member 36 in contact with the front walls of the unit case 81. Switching the air cylinder 84 on and off causes the mobile member 87 to move in either the direction m or n, shown by the arrows. When the convex part on the front side of the mobile member 87 and the convex part on the rear side of the base member 36 come into contact, the pressing member 22 will not retract in the direction opposite the arrow k. On the other hand, when the convex parts (or the concave part) on the front side of the mobile member 87 and the concave part (or the convex parts) on the rear side of the base member 36 mesh together, the pressing member 22 is allowed to retract in the direction opposite to the arrow k.

In the third embodiment, the large amount of pressure necessary for melting can be reliably secured by the mobile member 87. This is because the stopping unit for stopping the pressing member 22 from behind when the pressing member 22 is being pressed together with the receiving member 23, or when the bags W are being cut, is the mobile member 87 that is able to move to a position that blocks the pressing member 22 from retracting, and can also move into a position that allows the pressing member 22 to retract.

These embodiments are the preferred embodiments of the present invention; however, various revisions and modifications can be made so long as they do not deviate from the scope of the claims. For example, in the third embodiment, the mobile member 87 was an on/off type translation cam, but the mobile member 87 is not limited thereto. For example, a rotating cam whose profile has two levels of lift, which are on (large) and off (small) can be used, as well as any other possible substitutions.

In addition, in the embodiments described above, the present invention was applied to a packaging machine 1 with a melting-type cutting device, but the present invention can also be applied to a packaging machine with a cutting device that cuts a cylindrical film F along the width by applying only pressure but not heat.

As described in detail by the embodiments above, the present invention has a wide range of industrial applications in the field of packaging machines in which a cutting device is provided to a sealing device. This is because the present invention provides a packaging machine that has a cutting device able to switch between cutting and not cutting the bags, to prevent the pressing member from retracting when the bags are being cut, to secure the large amount of pressure necessary for cutting, and to prevent the size and weight of the drive source of the pressing member from increasing.

Moreover, terms that are expressed as "means-plus function" in the claims should include any structure that can be utilized to carry out the function of that part of the present invention.

The terms of degree such as "substantially", "about" and ''approximately'' as used herein mean a reasonable amount of deviation of the modified term such that the end result is not significantly changed. For example, these terms can be construed as including a deviation of at least ±5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. A packaging machine comprising:
a pair of sealing members (11, 12) configured so as to selectively seal a cylindrical packing material that extends therebetween;
a cutting device (22, 23) for cutting the cylindrical packing material; and
a stopping unit for selectively stopping the cutting device from retracting,
**characterized in that**
the cutting device comprises a pressing member (22) arranged on one of the pair of sealing members (11) and a receiving member (23) arranged on the other of the pair of sealing members (12), the cutting device configured to selectively press the pressing member (22) against the receiving member (23) and cut the cylindrical packing material; **in that**
a switching unit (30) is provided configured to switch the pressing member (22) between a pressing state and a non-pressing state with respect to the receiving member (23) when the sealing members (11, 12) are pressed together; and **in that**
the stopping unit (26, 34) is configured to selectively stop the pressing member (22) from retracting from the pressing state with the receiving member (23).

2. The packaging machine according to claim 1, wherein
the switching unit (30) comprises a drive source configured to cause the pressing member (22) to protrude a predetermined distance from the sealing surface of the one sealing member (11), and a force augmenting mechanism (31, 26, 34) configured to transmit the motive energy of the drive source to the pressing member (22), and
the stopping unit employs the force augmenting mechanism to stop the pressing member (22) from retracting.

3. The packaging machine according to claim 2, wherein
the force augmenting mechanism is comprised of a toggling mechanism; and
the pressing member (22) is stopped from retracting by reducing the angle formed by the longitudinal direction of the links (26, 34) of the toggling mechanism and the movement direction of the pressing member (22).

4. The packaging machine according to claim 2, wherein
the force augmenting mechanism is comprised of a cam mechanism; and
the pressing member (22) is stopped from retracting by reducing the angle formed by the tangential direction of the cams (60) of the cam mechanism and the direction orthogonal to the movement direction of the pressing member (22).

5. The packaging machine according to any of the preceding claims, wherein
the switching unit comprises an urging unit (84) that urges the pressing member (22) forward, a mobile member (87) that moves freely between an inhibiting position that inhibits the pressing member (22) from retracting and a permitting position that permits the pressing member (22) to retract, and a drive source configured to drive the mobile member (87) to the inhibiting position and the permitting position; and
the mobile member (87) is employed as the stopping unit (26, 34).

6. The packaging machine according to any of the preceding claims, further comprising:
an adjusting unit configured to adjust the pressing force of the pressing member (22) when the pressing member (22) is pressed together with the receiving member (23).

7. The packaging machine according to any of the preceding claims, wherein
the switching unit (30) is configured to switch the pressing member (22) from the pressing state to the non-pressing state when the sealing members (11,12) are pressed together.

## Patentansprüche

1. Eine Verpackungsmaschine, aufweisend:
ein Paar von Versiegelungsbauteilen (11, 12), ausgestattet, um ein zylindrisches Verpackungsmaterial, welches sich zwischen ihnen erstreckt, zu versiegeln;
eine Schneidvorrichtung (22, 23) zum Schneiden des zylindrischen Verpackungsmaterials; und
eine Anhalteeinheit zum wahlweisen Anhalten der Schneidvorrichtung vom Zurückziehen;
**dadurch gekennzeichnet, dass**
die Schneidvorrichtung ein Druckbauteil (22) aufweist, welches auf einem des Paares von Versiegelungsbauteilen (11) angeordnet ist, und ein Aufnahmebauteil (23), welches auf dem anderen des Paares von Versiegelungsbauteilen (12) angeordnet ist, wobei die Schneidvorrichtung derart ausgestaltet ist, um wahlweise das Druckbauteil (22) gegen das Aufnahmebauteil (23) zu drücken und das zylindrische Verpackungsmaterial zu schneiden;
dass
eine Schalteinheit (30) vorgesehen ist, ausgestaltet, um das Druckbauteil (22) zwischen einem Druckzustand und einem Nichtdruckzustand in Bezug auf das Aufnahmebauteil (23) zu schalten, wenn die Versiegelungsbauteile (11, 12) zusammengedrückt sind; und dass
die Anhalteeinheit (26, 34) derart ausgestaltet ist, um wahlweise das Druckbauteil (22) vom Zurückziehen vom Druckzustand mit dem Aufnahmebauteil (23) anzuhalten.

2. Verpackungsmaschine nach Anspruch 1, bei welcher
die Schalteinheit (30) eine Antriebsquelle aufweist, ausgestaltet, um das Druckbauteil (22) zu veranlassen, eine vorbestimmte Distanz von der Versiegelungsoberfläche des einen Versiegelungsbauteils (11) vorzuspringen, und einen Krafterhöhungsmechanismus (31, 26, 34), ausgestattet, um die Antriebsenergie der Antriebsquelle auf das Druckbauteil (22) zu übertragen, und
die Anhalteeinheit den Krafterhöhungsmechanismus verwendet, um das Druckbauteil (22) vom Zurückziehen anzuhalten.

3. Verpackungsmaschine nach Anspruch 2, bei welcher
der Krafterhöhungsmechanismus aus einem Kniehebelmechanismus besteht; und
das Druckbauteil (22) vom Zurückziehen angehalten wird durch Reduzieren des Winkels, gebildet durch die Längsrichtung der Verbindungsglieder (26, 34) des Kniehebelmechanismus und die Bewegungsrichtung des Druckbauteils (22).

4. Verpackungsmaschine nach Anspruch 2, bei welcher
der Krafterhöhungsmechanismus aus einem Nockenmechanismus besteht; und
das Druckbauteil (22) vom Zurückziehen angehalten wird durch Reduzieren des Winkels, gebildet durch die tangentiale Richtung der Nocken (60) des Nockenmechanismus und der Richtung orthogonal zur Bewegungsrichtung des Druckbauteils (22).

5. Verpackungsmaschine nach einem der vorhergehenden Ansprüche, bei welcher
die Schalteinheit eine Antriebseinheit (84), welche das Druckbauteil (22) vorwärtstreibt, ein bewegbares Bauteil (87), welches frei zwischen einer Verhinderungsposition, welche das Druckbauteil (22) vom Zurückziehen hindert, und einer Gestattungsposition, welche dem Druckbauteil (22) das Zurückziehen gestattet, bewegbar ist und eine Antriebsquelle aufweist, ausgestaltet, um das bewegbare Bauteil (87) zu der Verhinderungsposition und der Gestattungsposition anzutreiben; und
das bewegbare Bauteil (87) als Anhalteeinheit (26, 34) verwendet wird.

6. Verpackungsmaschine nach einem der vorhergehenden Ansprüche, weiter aufweisend:
eine Einstelleinheit, ausgestaltet, um die Druckkraft des Druckbauteils (22) einzustellen, wenn das Druckbauteil (22) mit dem Aufnahmebauteil (23) zusammengedrückt ist.

7. Verpackungsmaschine nach einem der vorhergehenden Ansprüche, bei welcher
die Schalteinheit (30) ausgestaltet ist, um das Druckbauteil (22) vom Druckzustand in den Nichtdruckzustand zu schalten, wenn die Versiegelungsbauteile (11, 12) zusammengedrückt sind.

## Revendications

1. Machine d'emballage comprenant :
une paire d'éléments de scellage (11, 12) configurés pour sceller de manière sélective un matériau d'emballage cylindrique qui s'étend entre eux ;
un dispositif de coupe (22, 23) pour couper le matériau d'emballage cylindrique ; et
une unité d'arrêt pour empêcher de manière sélective le dispositif de coupe de se rétracter,
**caractérisée en ce que**
le dispositif de coupe comprend un élément de pressage (22) placé sur l'un des éléments de scellage (11) et un élément récepteur (23) placé sur l'autre des éléments de scellage (12), le dispositif de coupe étant configuré pour presser de manière sélective l'élément de pressage (22) contre l'élément récepteur (23) et couper le matériau d'emballage cylindrique ;
**en ce qu'**une unité de commutation (30) est prévue, configurée pour commuter l'élément de pressage (22) entre un état de pressage et un état sans pression par rapport à l'élément récepteur (23) lorsque les éléments de scellage (11, 12) sont pressés l'un contre l'autre ;
et **en ce que** l'unité d'arrêt (26, 34) est configurée pour empêcher de manière sélective l'élément de pressage (22) de se rétracter de l'état de pressage avec l'élément récepteur (23).

2. Machine d'emballage selon la revendication 1, dans laquelle :
l'unité de commutation (30) comprend une source d'entraînement configurée pour faire sortir l'élément de pressage (22) sur une distance prédéterminée par rapport à la surface de scellage dudit un élément de scellage (11), et un mécanisme augmentant la force (31, 26, 34) configuré pour transmettre l'énergie motrice de la source d'entraînement à l'élément de pressage (22) ; et
l'unité d'arrêt emploie le mécanisme augmentant la force pour empêcher l'élément de pressage (22) de se rétracter.

3. Machine d'emballage selon la revendication 2, dans laquelle :
le mécanisme augmentant la force est constitué d'un mécanisme à bascule ; et
l'élément de pressage (22) est empêché de se rétracter en réduisant l'angle formé par la direction longitudinale des biellettes (26, 34) du mécanisme à bascule et la direction de déplacement de l'élément de pressage (22).

4. Machine d'emballage selon la revendication 2, dans laquelle :
le mécanisme augmentant la force est constitué d'un mécanisme à cames ; et
l'élément de pressage (22) est empêché de se rétracter en réduisant l'angle formé par la direction tangentielle des cames (60) du mécanisme à cames et la direction orthogonale à la direction de déplacement de l'élément de pressage (22).

5. Machine d'emballage selon l'une quelconque des revendications précédentes, dans laquelle :
l'unité de commutation comprend une unité d'avance (84) qui pousse l'élément de pressage (22) en avant, un élément mobile (87) qui se déplace librement entre une position d'inhibition qui empêche l'élément de pressage (22) de se rétracter et une position d'autorisation qui permet à l'élément de pressage (22) de se rétracter, et une source d'entraînement configurée pour entraîner l'élément mobile (87) vers la position d'inhibition et la position d'autorisation ; et
l'élément mobile (87) est employé comme unité d'arrêt (26, 34).

6. Machine d'emballage selon l'une quelconque des revendications précédentes, comprenant en outre une unité de réglage configurée pour régler la force de pression de l'élément de pressage (22) lorsque l'élément de pressage (22) est pressé avec l'élément récepteur (23).

7. Machine d'emballage selon l'une quelconque des revendications précédentes, dans laquelle l'unité de commutation (30) est configurée pour faire passer l'élément de pressage (22) de l'état de pressage à l'état sans pression lorsque les éléments de scellage (11, 12) sont pressés l'un contre l'autre.
